**Europäisches Patentamt**

**European Patent Office**

**Office européen des brevets**

(19)

(11) Numéro de publication : **0 340 131 B1**

(12) **FASCICULE DE BREVET EUROPEEN**

(45) Date de publication du fascicule du brevet :
**28.10.92 Bulletin 92/44**

(51) Int. Cl.⁵ : **H04N 7/00,** G08B 13/18,
A63H 30/04

(21) Numéro de dépôt : **89430010.2**

(22) Date de dépôt : **28.04.89**

(54) **Procédés pour transmettre des signaux vidéo, caméras vidéo pour cette transmission et applications de ces caméras.**

(30) Priorité : **29.04.88 FR 8805953**

(43) Date de publication de la demande :
**02.11.89 Bulletin 89/44**

(45) Mention de la délivrance du brevet :
**28.10.92 Bulletin 92/44**

(84) Etats contractants désignés :
**AT BE CH DE ES GB GR IT LI LU NL SE**

(56) Documents cités :
**EP-A- 0 082 055
CH-A- 651 984
FR-A- 2 573 894
US-A- 4 270 213**

(73) Titulaire : **IXEA, S.à.r.l. dite:
Château de la Saurine
F-13590 Meyreuil (FR)**

(72) Inventeur : **Frixon, Pierre
Les Boyers
F-13720-La Bouilladisse (FR)**

(74) Mandataire : **Moretti, René et al
c/o Cabinet BEAU DE LOMENIE
"Prado-Mermoz" 232, Avenue du Prado
F-13008 Marseille (FR)**

# Description

La présente invention a pour objet des procédés pour transmettre des signaux vidéo d'une caméra vidéo à un appareil de télévision, des caméras vidéo pour la mise en oeuvre de ces procédés et des applications de ces caméras.

Le secteur technique de l'invention est celui de la construction des caméras vidéo statiques destinées, notamment à la surveillance ou à des utilisations locales ou des caméras mobiles.

Dans de nombreuses applications telles que la surveillance de locaux, de magasins, de banques, d'appartements etc..., on utilise des caméras fixes réparties dans les locaux qui transmettent des signaux à des moniteurs vidéo situés dans un poste de surveillance.

La transmission des signaux entre les caméras et les moniteurs vidéo est faite généralement par câbles pour ne pas perturber la réception des émissions de télévision publiques qui sont transmises par voie herzienne sur des canaux déterminés.

Exceptionnellement, les autorités chargées de contrôler l'utilisation des fréquences porteuses peuvent autoriser une transmission locale par voie herzienne sur une fréquence porteuse bien déterminée, qui se trouve libre dans la zone d'émission, mais de telles autorisations sont difficiles à obtenir et ne peuvent se multiplier.

Le développement des technologies permet actuellement de construire des caméras vidéo de surveillance ayant de très bonnes performances pour un coût réduit.

Toutefois, la transmission des signaux par câbles entre la caméra et les moniteurs vidéo entraîne des dépenses importantes et freine les applications des caméras de surveillance.

L'objectif de la présente invention est de procurer des moyens permettant de transmettre par voie herzienne, les signaux vidéo sortant d'une caméra sans perturber les émissions de télévision publiques ou d'autres transmissions par voie herzienne déjà en service dans la zone de transmission des signaux et, par voie de conséquence, d'éviter les coûts de construction des lignes de transmission des signaux et de permettre de recevoir les images provenant d'une caméra de surveillance directement sur des appareils de télévision ou sur des moniteurs vidéo existants.

Cet objectif est atteint par un procédé pour transmettre par voie herzienne des signaux vidéo à partir d'une caméra vidéo, qui comporte les opérations suivantes : on détecte automatiquement les fréquences porteuses de signaux vidéo qui sont déjà occupées dans la zone d'utilisation de la caméra et on transmet les signaux vidéo sortant de la caméra en les mélangeant à une fréquence porteuse libre et différente d'un multiple ou d'un sous-multiple des fréquences occupées.

Selon un mode préférentiel, on détecte les fréquences porteuses de signaux vidéo qui sont déjà occupées localement au moyen d'un syntoniseur qui est connecté sur une antenne émettrice et réceptrice et qui balaye la totalité de la plage des fréquences porteuses et d'un circuit de détection qui détecte les pics de résonance, on enregistre dans la mémoire d'une unité de calcul les valeurs des fréquences occupées, correspondant auxdits pics de résonance et ladite unité de calcul est programmée pour choisir une fréqence porteuse disponible, située sensiblement au milieu du plus grand intervalle entre deux fréquences occupées et différente d'un multiple ou d'un sous-multiple d'une des fréquences occupées et ladite unité de calcul commande l'émission par un oscillateur local d'une fréquence porteuse qui correspond à ladite fréquence disponible.

Une caméra vidéo selon l'invention comporte :

- un oscillateur local programmable qui émet une fréquence porteuse;
- un modulateur qui mélange les signaux vidéo avec ladite fréquence porteuse;
- une antenne émettrice et réceptrice;
- un syntoniseur à balayage qui est connecté à ladite antenne et qui est équipé d'un circuit détecteur d'accord qui détecte les fréquences occupées;
- et une unité centrale de calcul équipée d'un microprocesseur et de mémoires qui commande le balayage dudit syntoniseur, qui enregistre les fréquences occupées et qui est programmé pour choisir une fréquence libre située sensiblement au milieu du plus grand intervalle entre deux fréquences occupées et différente d'un multiple ou d'un sous-multiple de l'une des fréquences occupées et pour commander l'émission par ledit oscillateur d'une fréquence porteuse qui correspond à ladite fréquence libre.

De préférence, une caméra selon l'invention comporte, en outre, un afficheur qui affiche la fréquence choisie.

L'invention a pour résultat de nouvelles caméras vidéo adaptées à être utilisées pour des transmissions d'image locales, par exemple comme caméras de surveillance ou comme caméras montées sur des mobiles.

Les caméras vidéo selon l'invention permettent de transmettre des images par voie herzienne à des téléviseurs existants et donc elles ne nécessitent aucun réseau câblé, ni aucun moniteur vidéo particulier pour la réception des images, ce qui les rend d'un emploi très économique. Ce résultat est atteint en évitant tout risque de perturbation des émetteurs de télévision par voie herzienne déjà installés dans la zone géographique où l'on utilise ces caméras.

Un avantage important de ces caméras vidéo de télévision réside dans le fait qu'elles peuvent être construites en série, sans tenir compre du lieu où elles vont être utilisées et elles s'auto-adaptent d'elles-mêmes aux conditions locales en choisissant automatiquement une fréquence d'émission non perturbatrice.

Les caméras vidéo selon l'invention peuvent être équipées de capteurs CCD, de circuits intégrés et d'une optique bon marché en lentilles plastiques, de sorte que le coût de fabrication et d'utilisation de ces caméras est très réduit.

On peut ainsi construire des caméras vidéo très petites et très peu encombrantes, qui peuvent être montées sur des jouets mobiles télécommandés par ondes radio, par ultrasons ou par infrarouges.

Ces jouets peuvent être utilisés par exemple dans un appartement en suivant sur l'écran d'un téléviseur les images transmises par la caméra et en cherchant à éviter les obstacles grâce à la télécommande, ce qui en fait un jeu vidéo particulièrement attractif dans lequel les images de synthèse apparaissant habituellement sur les écrans dans le cas des jeux vidéo connus à ce jour, sont remplacées par des images réelles prises par la caméra.

Les caméras selon l'invention sont également particulièrement adaptées pour être montées sur des véhicules de surveillance, par exemple sur des véhicules de police qui patrouillent et qui transmettent directement les images prises par la caméra à un poste de contrôle fixe.

Les caméras vidéo selon l'invention, qui peuvent être utilisées en les déplaçant du fait qu'elles ne comportent aucun fil de liaison, présentent des avantages analogues à ceux des microphones H.F. qui émettent directement en haute fréquence les sons captés.

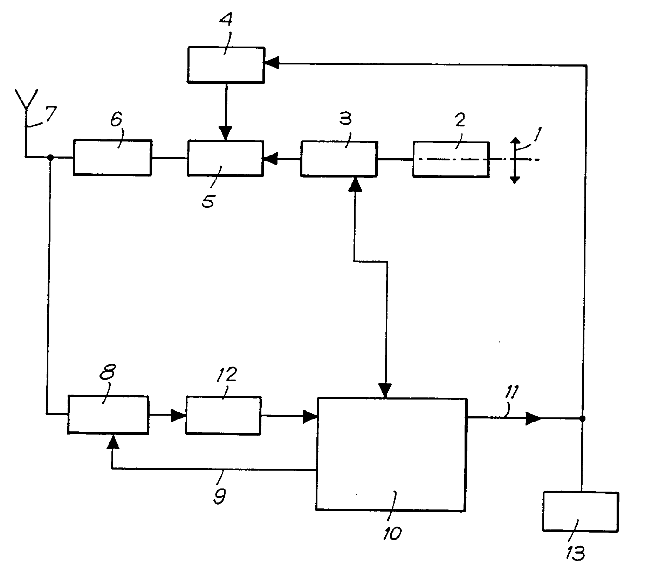

La description suivante se réfère au dessin annexé qui représente schématiquement, sans aucun caractère limitatif, les composants essentiels d'une caméra vidéo selon l'invention.

La figure unique représente une caméra vidéo destinée à la surveillance, qui est une caméra peu coûteuse, de faible encombrement et de faible consommation, qui permet d'obtenir des images de moindre qualité que les images fournies par des caméras dites de haut de gamme, mais de qualité suffisante pour les besoins de la surveillance.

Cette caméra comporte, de façon connue, un objectif 1, derrière lequel se trouve un analyseur d'images 2, constitué par un capteur matriciel de type CCD (Charged Coupled Device) ou DTC.

La caméra comporte, en outre, les circuits habituels 3 de gestion du capteur qui émettent les signaux de balayage et les impulsions de synchronisation.

Une caméra selon l'invention comporte, en outre, un oscillateur local 4 qui est programmable, par exemple un oscillateur de type VCO (Voltage Controlled Oscillator), qui émet une fréquence dépendant de la tension qu'il reçoit.

Elle comporte, en outre, un circuit modulateur 5 qui reçoit à la fois les signaux vidéo émis par l'analyseur 2 et la fréquence émise par l'oscillateur 4 et qui les mélange, de sorte que la fréquence émise par l'oscillateur, qui est une très haute fréquence, sert de fréquence porteuse.

La caméra comporte, en outre, un circuit émetteur 6, dont l'entrée est connectée à la sortie du modulateur 5 et dont la sortie est connectée sur une petite antennne 7.

La caméra comporte, en outre, un syntoniseur 8, c'est-à-dire un circuit d'accord désigné généralement sous le nom de "TUNER" qui est connecté à l'antenne 7.

Ce syntoniseur est équipé d'une commande de balayage en fréquence 9, qui permet de faire varier la fréquence du syntoniseur sur toute la plage des fréquences porteuses utilisées pour les transmissions herziennes de signaux vidéo par exemple sur une plage comprise entre 400 et 800 MHz.

La caméra comporte, en outre, une unité de calcul électronique 10, comportant un microprocesseur, des mémoires mortes et vives et une interface entrées-sorties.

Une des sorties est connectée sur la commande de balayage 9 du syntoniseur 8.

Une autre sortie 11 est connectée à l'oscillateur programmable 4, pour commander la fréquence émise par celui-ci.

Le syntoniseur 8 est équipé d'un circuit 12 de détection de fréquences porteuse, qui détecte la coïncidence entre chaque fréquence porteuse captée par l'antenne 7 et une des fréquences successives balayées par le syntoniseur. Le circuit de détection de porteuse 12 est connecté sur une entrée de l'unité de calcul 10 à laquelle il envoie un signal chaque fois qu'il détecte un accord et l'unité de calcul enregistre dans sa mémoire vive les différentes fréquences d'accord détectées par le circuit 12 au cours d'un balayage de fréquences.

La caméra comporte, en outre, un afficheur 13 qui est connecté sur la ligne de sortie 11 et qui affiche la fréquence sur laquelle l'oscillateur local 4 émet.

Le fonctionnement d'une caméra selon l'invention est le suivant.

Avant d'utiliser une caméra en un lieu déterminé, le microprocesseur déclenche le dispositif de détermination automatique d'une fréquence porteuse qui est destiné à choisir automatiquement une fréquence porteuse, pour éliminer tout risque d'émettre sur un canal de télévision déjà utilisé dans la région ou sur un canal voisin et donc tout risque de perturbation des émissions de télévision.

Dès la mise sous tension de la caméra, le microprocesseur 10 commande le balayage par le syntoniseur 8 de la totalité de la gamme de fréquences susceptibles d'être utilisées comme fréquences porteuses de signaux vidéo, par exemple la totalité des fréquences comprises entre 400 et 800 MHz.

Le syntoniseur 8 reçoit en même temps les fréquences porteuses captées par l'antenne 7.

Au cours du balayage en fréquences, chaque fois que le balayage passe par l'une des fréquences captées par l'antenne, le circuit 12 détecte la coïncidence et envoie un signal de détection à l'unité de calcul 10, qui enregistre dans sa mémoire la fréquence d'accord. Ainsi, à la fin de la scrutation de toute la bande de fréquences, l'unité de calcul 10 a enregistré une liste à jour de toutes les fréquences porteuses utilisées pour tous les émetteurs locaux en service.

L'unité de calcul détermine alors parmi tous les canaux restant libres, c'est-à-dire parmi toutes les fréquences porteuses autorisées pour des transmissions locales et non utilisées au moment du balayage, la fréquence sur laquelle émettra l'oscillateur local 4, qui sera la fréquence porteuse sur laquelle la caméra va émettre.

Le microprocesseur de l'unité de calcul est programmé pour choisir une fréquence d'émission situé sensiblement au milieu du plus grand intervalle séparant deux canaux déjà utilisés et une fréquence qui ne corresponde pas à un multiple ou à un sous-multiple d'une des fréquences occupée pour ne pas perturber celles-ci.

Une fois la fréquence d'émission déterminée, l'unité centrale de calcul 10 commande l'oscillateur 4 par la ligne 11, pour qu'il émette sur cette fréquence. En même temps, la fréquence choisie est affichée sur l'afficheur 13, de sorte que l'utilisateur peut la lire et régler son téléviseur sur le canal correspondant à cette fréquence, afin de capter les signaux émis par la caméra et de faire apparaître sur l'écran de son téléviseur les images qui seront prises par la caméra.

Quelles que soient les fréquences porteuses utilisées en un lieu déterminé, soit pour des émissions de télévision publiques ou privées, soit par des émetteurs ou relais locaux, soit même par d'autres caméras du même type déjà en service, les caméras selon l'invention garantissent automatiquement que le canal sur lequel elles émettent ne peut en aucun cas perturber les autres émissions transmises par voie herzienne dans le même secteur géographique, de sorte que l'autorisation d'utiliser des caméras selon l'invention peut être obtenue sans difficulté des autorités chargées de contrôler l'utilisation des fréquences pour les transmissions par voie herzienne.

Les caméras selon l'invention peuvent donc être utilisées à proximité d'un téléviseur existant pour obtenir une image sur l'écran de ce téléviseur sans avoir à utiliser rien d'autre que la caméra.

Les caméras selon l'invention n'étant pas reliées à un câble, peuvent être utilisées comme caméras mobiles, par exemple comme caméras montées sur un robot, sur un bras manipulateur, sur des jouets mobiles etc....

Il est précisé que l'oscillateur local 4 peut être constitué par un circuit de synthèse numérique.

Bien entendu, les caméras selon l'invention comportent des circuits d'alimentation électrique à partir de batteries rechargeables.

Les caméras selon l'invention permettent notamment de construire de nouveaux jouets mobiles portant une petite caméra selon l'invention, peu encombrante et peu onéreuse et comportant également des moyens de télécommande connus par ondes radio, par ultrasons ou par infrarouges.

Un enfant peut utiliser un tel jouet dans un appartement, en regardant sur l'écran du téléviseur de l'appartement, les images stransmises par la caméra et il peut utiliser la télécommande pour jouer à éviter les obstacles qui apparaissent dans le champ de la caméra. On obtient ainsi un jeu vidéo très attractif, dans lequel les images qui apparaissent sur l'écran du téléviseur sont des images réelles et les déplacements du jouet sont également réels au lieu des images de synthèse et des boutons de commande des jeux vidéo électroniques connus à ce jour.

De la même façon, une caméra selon l'invention peut être montée sur un robot télécommandé qui peut être manoeuvré à partir des images apparaissant sur l'écran d'un téléviseur de type courant.

**Revendications**

1. Procédé pour transmettre par voie herzienne des signaux vidéo, à partir d'une caméra vidéo, caractérisé en ce que l'on détecte automatiquement les fréquences porteuses de signaux vidéo qui sont déjà occupées dans la zone d' utilisation de la caméra et on transmet les signaux vidéo sortant de la caméra en les mélangeant à une fréquence porteuse libre, différente d'un multiple ou d'un sous-multiple des fréquences occupées.

2. Procédé selon la revendication 1, caractérisé en ce que l'on détecte les fréquences porteuses de signaux vidéo qui sont déjà occupées localement au moyen d'un syntoniseur (8) qui est connecté sur une antenne émettrice et réceptrice (7) et qui balaye la totalité de la plage des fréquences porteuses et d'un circuit de détection (12) qui détecte les pics de résonance, on enregistre dans la mémoire d'une unité de calcul (10) les valeurs des fréquences occupées, correspondant auxdits pics de résonance et ladite unité de calcul est programmée pour choisir une fréquence porteuse disponible, située sensiblement au milieu du plus grand intervalle entre deux fréquences occupées et différente d'un multiple ou d'un sous-multiple d'une des fréquences occupées et ladite unité de calcul commande l'émission par un oscillateur local (4) d'une fréquence porteuse qui correspond à ladite fréquence disponible.

3. Caméra vidéo, caractérisée en ce qu'elle comporte :

-un oscillateur local programmable (4) qui émet une fréquence porteuse;

-un modulateur (5) qui mélange les signaux vidéo avec ladite fréquence porteuse;

-une antenne émettrice et réceptrice (7);

-un syntoniseur à balayage (8) qui est connecté à ladite antenne (7) et qui est équipé d'un circuit détecteur d'accord (12) qui détecte les fréquences occupées;

-et une unité centrale de calcul (10) équipée d'un microprocesseur et de mémoires qui commande le balayage dudit syntoniseur (8), qui enregistre les fréquences occupées et qui est programmé pour choisir une fréquence libre située sensiblement au milieu du plus grand intervalle entre deux fréquences occupées et différente d'un multiple ou d'un sous-multiple de l'une des fréquences occupées et pourcommander l'émission par ledit oscillateur (4) d'une fréquence porteuse qui correspond à ladite fréquence libre.

4. Caméra vidéo selon la revendication 3, caractérisée en ce qu'elle comporte, en outre, un afficheur (11) qui affiche ladite fréquence porteuse choisie.

5. Caméra vidéo selon l'une quelconque des revendications 3 et 4, caractérisée en ce que ledit oscillateur local est constitué par un circuit de synthèse numérique de signal sinusoïdal incorporé à ladite unité de calcul (10).

6. Applications de caméras vidéo selon l'une quelconque des revendications 3 à 5, caractérisées en ce que lesdites caméras sont incorporées à des dispositifs de surveillance ou à des automates télécommandés et les images vidéo sont transmises par voie herzienne à des téléviseurs équipant un poste de contrôle ou de télécommande.

7. Applications de caméras vidéo selon l'une quelconque des revendications 3 à 5, caractérisées en ce que lesdites caméras sont montées sur des jouets mobiles et les images vidéo sont reçues par des téléviseurs domestiques.

8. Applications selon la revendication 7, caractérisée en ce que lesdits jouets mobiles comportent des moyens de télécommande.

9. Application de caméras vidéo selon l'une quelconque des revendications 3 à 5, caractérisée en ce que lesdites caméras sont montées sur des véhicules de surveillance et les images émises par les caméras sont transmises par voie herzienne à des téléviseurs situés dans un local de surveillance.

## Patentansprüche

1. Verfahren zur Übertragung von von einer Videokamera ausgehenden Videosignalen auf drahtlosem Wege, dadurch gekennzeichnet, daß die Videosignal-Trägerfrequenzen, die in der Gebrauchszone der Kamera bereits belegt sind, automatisch detektiert und die von der Kamera ausgehenden Videosignale übertragen werden, indem sie mit einer freien Trägerfrequenz gemischt werden, die von Harmonischen oder Sub-Harmonischen der belegten Frequenzen verschieden ist.

2. Verfahren nach Anspruch 1, dadurch gekennzeichnet, daß die lokal bereits belegten Videosignal-Trägerfrequenzen mittels eines Abstimm-Mittels (8) detektiert werden, das mit einer Sende- und Empfangsantenne (7) verbunden ist und die Gesamtheit des Trägerfrequenzbereiches und eines die Resonanzspitzen detektierenden Detektionskreises (12) abtastet, daß im Speicher einer Rechnereinheit (10) die Werte der belegten Frequenzen aufgezeichnet werden, welche Werte den genannten Resonanzspitzen entsprechen, und die genannte Rechnereinheit zur Auswahl einer verfügbaren im wesentlichen in der Mitte des größten Intervalls zwischen zwei belegten Frequenzen liegenden und von Harmonischen oder Sub-Harmonischen einer der belegten Frequenzen verschiedenen Trägerfrequenz programmiert ist, und daß die genannte Rechnereinheit das Aussenden einer Trägerfrequenz, welche der genannten verfügbaren Frequenz entspricht, durch einen lokalen Oszillator (4) steuert.

3. Videokamera, dadurch gekennzeichnet, daß sie

-einen programmierbaren lokalen Oszillator (4), der eine Trägerfrequenz aussendet;

-einen Modulator (5), der die Videosignale mit der genannten Trägerfrequenz mischt;

-eine Sende- und Empfangsantenne (7);

-eine Abtast-Abstimmeinrichtung (8), die mit der genannten Antenne (7) verbunden ist und mit einem Abstimmdetektorkreis (12) versehen ist, der die belegten Frquenzen detektiert;

-und eine einen Mikroprozessor und Speicher umfassende zentrale Rechnereinheit (10) aufweist, die das Abtasten durch die genannte Abstimmeinrichtung (8) steuert, die belegten Frequenzen aufzeichnet und die zur Aufwahl einer freien Frequenz, die im wesentlichen in der Mitte des größten Intervalls zwischen zwei belegten Frequenzen liegt und von Harmonischen oder Sub-Harmonischen von einer der belegten Frequenzen verschieden ist, programmiert ist und das Aussenden einer der genannten freien Frequenz entsprechenden Trägerfrequenz durch den genannten Oszillator (4) steuern kann.

4. Videokamera nach Anspruch 3, dadurch gekennzeichnet, daß sie im übrigen eine Anzeigeeinrichtung (11) aufweist, die die genannte gewählte Trägerfrequenz anzeigt.

5. Videokamera nach einem der Ansprüche 3 und 4, dadurch gekennzeichnet, daß der genannte lokale Oszillator aus einem in die genannte Rechnereinheit (10) inkorporierten Kreis zur numerischen Synthese sinusförmiger Signale besteht.

6. Anwendungen von Videokameras nach einem der Ansprüche 3 bis 5, dadurch gekennzeichnet, daß die genannten Kameras in Überwachungseinrichtungen oder ferngesteuerte Automaten inkorporiert sind, und daß die Videobilder auf drahtlosem Weg zu Fernsehgeräten übertragen werden, die an Überwachungs- oder Fernsteuerungsstationen aufgestellt sind.

7. Anwendungen von Videokameras nach einem der Ansprüche 3 bis 5, dadurch gekennzeichnet, daß die genannten Kameras auf mobilem Spielzeug montiert sind, und die Videobilder von Heim-Fernsehgeräten empfangen werden.

8. Anwendungen nach Anspruch 7, dadurch gekennzeichnet, daß die genannten mobilen Spielzeuge Fernsteuerungsmittel umfassen.

9. Anwendung von Videokameras nach einem der Ansprüche 3 bis 5, dadurch gekennzeichnet, daß die genannten Kameras auf Überwachungsfahrzeugen montiert sind, und die von den Kameras ausgesandten Bilder auf drahtlosem Weg zu in einem Überwachungsraum befindlichen Fernsehern übertragen werden.

## Claims

1. Process for transmitting by Hertzian waves video signals from a video camera, characterized in that the carrier frequencies of video signals which are already occupied in the zone of use of the camera are automatically detected and the video signals issuing from the camera are transmitted, by mixing them, at a free carrier frequency different from a multiple or a sub-multiple of the occupied frequencies.

2. Process according to claim 1, characterized in that the carrier frequencies of video signals which are already occupied locally are detected by means of a tuner (8) which is connected to a transceiver antenna (7) and which scans the whole of the range of carrier frequencies, and a detection circuit (12) which detects the resonance peaks; there are recorded in the memory of a calculating unit (10) the values of the occupied frequencies, corresponding to said resonance peaks and said calculating unit is programmed to select an available carrier frequency located substantially in the middle of the largest interval between two occupied frequencies and different from a multiple or sub-multiple of one of the occupied frequencies and said calculating unit controls emission by a local oscillator (4) of a carrier frequency which corresponds to said available frequency.

3. Video camera, characterized in that it comprises:
   - a programmable local oscillator (4) which emits a carrier frequency;
   - a modulator (5) which mixes the video signals with said carrier frequency;
   - a transceiver antenna (7);
   - a scanning tuner (8) which is connected to said antenna (7) and which is equipped with a tuning detector circuit (12) which detects the occupied frequencies;
   - and a central calculating unit (10) equipped with a microprocessor and memories, which controls scanning of said tuner (8), which records the occupied frequencies and which is programmed to select a free frequency located substantially in the middle of the largest interval between two occupied frequencies and different from a multiple or a sub-multiple of one of the occupied frequencies and to control the emission by said oscillator (4) of carrier frequency which corresponds to said free frequency.

4. Video camera according to claim 3, characterized in that it comprises, in addition, a display device (11) which displays said carrier frequency selected.

5. Video camera according to any one of claims 3 and 4, characterized in that said local oscillator is constituted by a digital sinusoidal signal synthesis circuit incorporated in said calculating unit (10).

6. Applications of video cameras according to any one of claims 3 to 5, characterized in that said cameras are incorporated in watching devices or in remote-controlled automats and the video images are transmitted by Hertzian waves to television sets equipping a monitoring or remote-control station.

7. Applications of video cameras according to any one of claims 3 to 5, characterized in that said cameras are mounted on mobile toys and the video images are received by domestic television sets.

8. Applications according to claim 7, characterized in that said mobile toys comprise remote-control means.

9. Application of video cameras according to any one of claims 3 to 5, characterized in that said cameras are mounted on watching vehicles and the images emitted by the cameras are transmitted by Hertzian waves to television sets located in a watching premises.